# EUROPEAN PATENT APPLICATION

(11) **EP 1 965 337 A1**
(43) Date of publication of application: **03.09.2008**
(21) Application number: 08151607.2
(22) Date of filing: 19.02.2008
(51) Int. Cl.: G06K 17/00, H04N 1/00

(54) **Integrated Data Scanning, Processing and Printing System for Pre-Instructing a Print Job Output**

(30) Priority: 02.03.2007 US 713328
(71) Applicant: Xerox Corporation, Rochester, New York 14644 (US)
(72) Inventor: Berry, Kenneth, Ontario, NY 14519 (US)
(74) Representative: Grünecker, Kinkeldey, Stockmair & Schwanhäusser Anwaltssozietät

(57) **Abstract**

A data processing system includes a data processing machine having at least one processor and at least one printer command key. A printer includes at least one processor. A workstation has at least one processor. The processors communicate with one another. At least one processor has a set of programmable instructions configured for execution thereof for receiving pre-instructions via the at least one printer command key to request print results of a scan of input data to the data processing machine prior to scanning of the input data. The processors may request a print job output by the printer of the results from the data processing of the input data by the data processing machine and printing of the results by the printer. A corresponding method includes pre-instructing the machine to request the print results prior to scanning of the input data.

## Description

### BACKGROUND

### Technical Field

The present disclosure relates to systems and methods for scanning and processing data and printing the results by a printer.

### Description of Related Art

Data processing machines are well known in the art. One particular application of a data processing machine is a scanning machine wherein student responses to an examination are handwritten, usually by pencil, onto a standardized form in which the student chooses the answers to a multiple choice examination. The standardized form is then scanned by a data processing machine which then processes the responses to provide the test scores of the individual students. The processing machine may also analyze the test score results for particular groups of students or for particular examination questions, etc. In addition, the processing machine may also provide summary results of the responses.

The scanning machine may save the test results in either an electronically modifiable spreadsheet or a fixed format such as a "pdf' file. Once the results are saved, a user must print the test results after all of the sheets have been scanned. This process can be time consuming since oftentimes the user needs individual test reports for each student or only for a selected group of students.

### SUMMARY

In view of the problems regarding prior art systems and methods for processing print job requests for data processing machines, the present disclosure relates to a data processing system that includes a data processing machine having at least one processor and at least one printer command key. The system also includes a printer having at least one processor. The data processing system also includes a workstation having at least one processor, wherein the at least one processor of the data processing machine, the at least one processor of the workstation, and the at least one processor of the printer communicate with one another. At least one of the at least one processor of the data processing machine, the at least one processor of the workstation, and the at least one processor of the printer has a set of programmable instructions configured for execution thereof for receiving pre-instructions via the at least one printer command key to request print results of a scan of input data to the data processing machine prior to scanning of the input data.

In one embodiment, the at least one processor of the data processing machine communicates with the at least one processor of the workstation. The at least one processor of the workstation has a set of programmable instructions configured for execution by the at least one processor of the workstation for requesting print results of the scan of input data to the data processing machine prior to scanning of the input data.

In one embodiment, the at least one processor of the data processing machine communicates with the at least one processor of the printer. The at least one processor of the data processing machine has a set of programmable instructions configured for execution by the at least one processor of the data processing machine for requesting print results of the scan of input data to the data processing machine prior to scanning of the input data.

The at least one processor of the data processing machine may have a set of programmable instructions configured for execution by the at least one processor of the data processing machine for scanning the input data to the data processing machine, and completing the data processing to achieve results from the data processing of the input data.

In one embodiment, the at least one processor of the workstation communicates with the at least one processor of the data processing machine and with the at least one processor of the printer. The at least one processor of the workstation has a set of programmable instructions configured for execution by the at least one processor of the workstation for requesting a print job output by the printer of the results from the data processing of the input data by the data processing machine and printing the results by the printer.

In one embodiment, the at least one processor of the data processing machine communicates with the at least one processor of the printer. The at least one processor of the data processing machine and the at least one processor of the printer have a set of programmable instructions configured for execution by the at least one processor of the at least one data processing machine and the at least one processor of the printer for requesting a print job output by the printer of the results from the data processing of the input data by the data processing machine and printing the results by the printer.

The print results may be at least one of individual data results, group data results, and summary results. The input data may be student responses to an examination and the data processing machine may be a response scoring and analyzing machine.

The present disclosure relates also to a data processing machine that includes at least one processor and at least one printer command key. The at least one processor is configured for communication with at least one processor of a workstation and with at least one processor of a printer. The at least one processor of the data processing machine, the at least one processor of the workstation, and the at least one processor of the printer communicate with one another, and at least one of the at least one processor of the data processing machine, the at least one processor of the workstation, and the at least one processor of the printer has a set of programmable instructions configured for execution thereof for receiving pre-instructions via the at least one printer command key to request print results of a scan of input data to the data processing machine prior to scanning of the input data. The data processing machine may be further configured as described above with respect to the data processing system.

In a further embodiment the at least one processor of the data processing machine is configured to communicate with the at least one processor of the workstation, wherein the at least one processor of the workstation has a set of programmable instructions configured for execution by the at least one processor of the workstation for:
requesting print results of the scan of input data to the data processing machine prior to scanning of the input data.

In a further embodiment the at least one processor of the data processing machine is configured to communicate with the at least one processor of the printer, wherein the at least one processor of the data processing machine has a set of programmable instructions configured for execution by the at least one processor of the data processing machine for:
requesting print results of the scan of input data to the data processing machine prior to scanning of the input data.

In a further embodiment the at least one processor of the data processing machine has a set of programmable instructions configured for execution by the at least one processor for:
scanning the input data to the data processing machine; and
completing the data processing to achieve results from the data processing of the input data.

In a further embodiment the data processing machine is configured wherein the at least one processor of the workstation communicates with the at least one processor of the data processing machine and with the at least one processor of the printer, and wherein the at least one processor of the workstation has a set of programmable instructions configured for execution by the at least one processor of the workstation for:
requesting a print job output by the printer of the results from the data processing of the input data by the data processing machine; and
printing the results by the printer.

In a further embodiment the data processing machine is configured wherein the at least one processor of the data processing machine communicates with the at least one processor of the printer, and wherein the at least one processor of the data processing machine and the at least one processor of the printer have a set of programmable instructions configured for execution by the at least one processor of the at least one data processing machine and the at least one processor of the printer for:
requesting a print job output by the printer of the results from the data processing of the input data by the data processing machine; and
printing the results by the printer.

In a further embodiment the results are at least one of individual data results, group data results, and summary results.

In a further embodiment the input data are student responses to an examination and wherein the data processing machine is a response scoring and analyzing machine.

The present disclosure relates also to a method of processing data that includes pre-instructing a data processing machine to request print results of a scan of input data to the data processing machine prior to scanning of the input data. The method may further include scanning the input data to the data processing machine and completing the data processing to achieve results from the data processing of the input data. In addition, the method may further include requesting a print job output of the results from the data processing of the input data and printing the results. The print results may be at least one of individual data results, group data results, and summary results and the input data may be student responses to an examination and the data processing machine may be a response scoring and analyzing machine.

In a further embodiment the method further comprises:
scanning the input data to the data processing machine; and
completing the data processing to achieve results from the data processing of the input data.

In a further embodiment the method further comprises:
requesting a print job output of the results from the data processing of the input data; and
printing the results.

In a further embodiment the print results are at least one of individual data results, group data results, and summary results.

In a further embodiment the input data are student responses to an examination and wherein the data processing machine is a response scoring and analyzing machine.

### BRIEF DESCRIPTION OF THE DRAWINGS

Various embodiments of the present disclosure will be described herein below with reference to the figures wherein:
FIG. 1 is a schematic diagram of a system for requesting print results of a scan of input data to a data processing machine according to the present disclosure; and
FIG. 2 is a logic diagram of a method for requesting print results of a scan of input data to a data processing machine according to the present disclosure.

### DETAILED DESCRIPTION

To address the issues related to prior art methods of requesting a print job for scanned data results as described above, the present disclosure relates to a data processing system that includes a data processing machine configured for receiving pre-instructions via at least one printer actuation key to request print results of a scan of input data to the data processing machine prior to scanning of the input data.

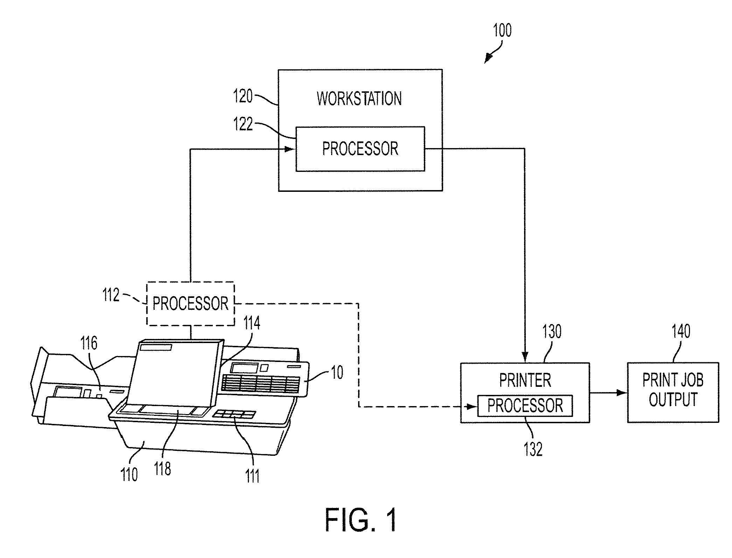

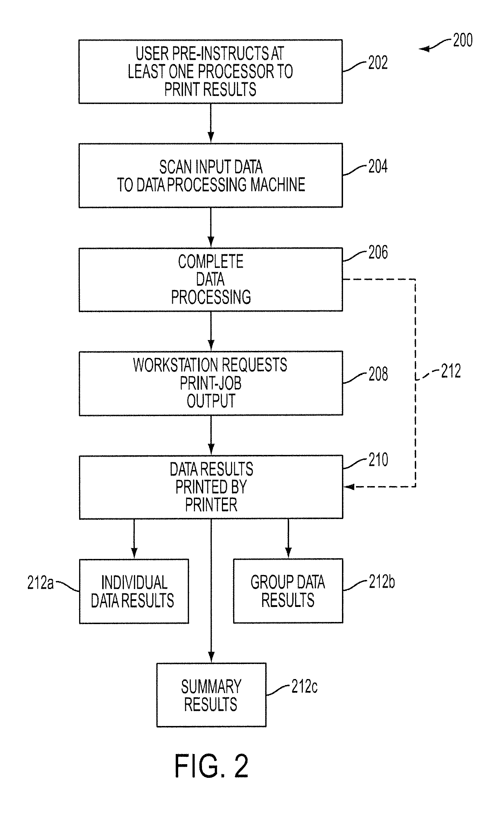

Referring now to FIGS. 1 and 2, there is disclosed a data processing system 100 according to the present disclosure. More particularly, the data processing system 100 includes a scanning data processing machine 110 that also includes at least one processor 112. The system 100 further includes a workstation 120 having at least one processor 122 and also a printer 130 that includes at least one processor 132. The at least one processor 112 of the data processing machine 110, the at least one processor 122 of the workstation 120, and the at least one processor 132 of the printer 130 communicate with one another. The printer 130 may be, for example, a printer dedicated to the data processing machine 110 or a shared network printer (not shown). In addition, the system 100 may be in the form of an integrated data scanning, processing, and printing system for pre-instructing a print job output. As used herein, the term printer refers to a printer or an image marking device, and the term printer is used herein for consistency.

The data processing machine 110 may be a test scoring and analyzing machine wherein student responses to an examination are handwritten, usually by pencil, onto one or more standardized forms, illustrated as form 10 in FIG. 1, onto which a student has written the student's answers to a multiple choice examination.

In accordance with the present disclosure, the data processing machine 110 further includes at least one printer command key or button 111. The standardized forms 10 are input into a form inlet port 114 into which the forms 10 are inserted and scanned by the data processing machine 110. The data processing machine 110 then processes the forms 10 to provide the test scores of the individual students. The forms 10 that have been processed are ejected into an outlet bin 116. The processing machine 110 may also analyze the test score results for particular groups of students or for particular examination questions, etc. In addition, the processing machine 110 may also provide summary results of the responses.

The scanning data processing machine 110 may save the test results in either an electronically modifiable spreadsheet or a fixed format such as a "pdf' file. The scanning data processor or processing machine 110 is also configured wherein at least one of the at least one processor 112 of the data processing machine 110, the at least one processor of the workstation, and the at least one processor of the printer has a set of programmable instructions configured for execution by the at least one processor 112 for receiving pre-instructions via the at least one printer command key 111 to request print results of a scan of input data to the data processing machine 110 prior to scanning of the input data.

In one embodiment, the at least one processor 112 of the data processing machine 110 communicates with the at least one processor 122 of the workstation 120 wherein the at least one processor 122 of the workstation 120 has a set of programmable instructions configured for execution by the at least one processor of the workstation 120 for requesting print results of the scan of input data to the data processing machine 110 prior to scanning of the input data.

In one embodiment, the at least one processor 112 of the data processing machine 110 communicates directly with the at least one processor 132 of the printer 130 wherein the at least one processor 112 of the data processing machine 110 has a set of programmable instructions configured for execution by the at least one processor 112 of the data processing machine 110 for requesting print results of the scan of input data to the data processing machine 110 prior to scanning of the input data.

The at least one processor 112 of the data processing machine 110 may also include a set of programmable instructions configured for execution by the at least one processor 112 of the data processing machine 110 for scanning the input data to the data processing machine 110 and completing the data processing to achieve results from the data processing of the input data.

In one embodiment, the at least one processor 122 of the workstation 120 communicates with the at least one processor 112 of the data processing machine 110 and with the at least one processor 132 of the printer 130. The at least one processor 122 of the workstation 120 has a set of programmable instructions configured for execution thereof for requesting a print job output 140 by the printer 130 of the results from the data processing of the input data by the data processing machine 110, and printing the results by the printer 130.

In one embodiment, the at least one processor 112 of the data processing machine 110 communicates directly with the at least one processor 132 of the printer 130 wherein the at least one processor 112 of the data processing machine 110 and the at least one processor 112 of the printer 110 have a set of programmable instructions configured for execution by the at least one processor 112 of the data processing machine 110 and the at least one processor 132 of the printer 130 for requesting the print job output 140 by the printer 130 of the results from the data processing of the input data by the data processing machine 110, and printing the results by the printer 130. As described above, the print results may be at least one of individual data results, group data results, and summary results. Although the at least one processor 112 may communicate directly with the at least one processor 132, the communication therebetween may take a path through the at least one processor 122 of the workstation 120 with the at least one processor 122 having a passive function rather than an active function.

Additionally, as described above, the system 100 may be in the form of an integrated data scanning, processing, and printing system for pre-instructing a print job output. The integration of system 100 may be in the form of the data processing machine 110, the workstation 120 and the printer 130 being configured as separate individual units. Alternatively, the processing machine 110 may be physically combined with the printer 130 and/or with the workstation 120 into a common system housing or more than one housing. The embodiments of system 100 are not limited thereby or thereto

Those skilled in the art will recognize that the present disclosure relates also to the data processing machine 110 that includes the at least one processor 112 and the at least one printer command key 111 as described above wherein the at least one processor 112 is configured for communication with the at least one processor 122 of the workstation 120 and with the at least one processor 132 of the printer 130. Again, the at least one processor 112 of the data processing machine 110, the at least one processor 122 of the workstation 120, and the at least one processor 132 of the printer 130 communicate with one another. The data processing machine 110 is configured wherein at least one of the at least one processor 112 of the data processing machine 110, the at least one processor 122 of the workstation 120 and the at least one processor 132 or the printer 130 has a set of programmable instructions configured for execution thereof for receiving pre-instructions via the at least one printer command key 111 to request print results of the scan of input data to the data processing machine 110 prior to scanning of the input data.

In one embodiment, the at least one processor 112 of the data processing machine 110 is configured to communicate with the at least one processor 122 of the workstation 120 wherein the at least one processor 122 of the workstation 120 has a set of programmable instructions configured for execution by the at least one processor 122 of the workstation 120 for requesting print results of the scan of input data to the data processing machine 110 prior to scanning of the input data. In addition, the data processing machine 110 is configured wherein the at least one processor 122 of the workstation 130 communicates with the at least one processor 112 of the data processing machine 110 and with the at least one processor 132 of the printer 130. The at least one processor 122 of the workstation 120 has a set of programmable instructions configured for execution by the at least one processor 122 of the workstation 120 for requesting a print job output by the printer 130 of the results from the data processing of the input data by the data processing machine 110 and printing the results by the printer 130.

In one embodiment, the data processing machine 110 is configured wherein the at least one processor 112 of the data processing machine 110 is configured to communicate with the at least one processor 132 of the printer 130 wherein the at least one processor 112 of the data processing machine 110 has a set of programmable instructions configured for execution by the at least one processor 112 of the data processing machine 110 for requesting print results of the scan of input data to the data processing machine 110 prior to scanning of the input data. Again, the at least one processor 112 of the data processing machine 110 communicates with the at least one processor 132 of the printer 130. The at least one processor 112 of the data processing machine 110 and the at least one processor 132 of the printer 130 have a set of programmable instructions configured for execution by the at least one processor 112 of the at least one data processing machine 110 and the at least one processor 132 of the printer 130 for requesting print job output 140 by the printer 130 of the results from the data processing of the input data by the data processing machine 110, and printing the results by the printer 130.

Referring particularly to FIG. 2, the present disclosure relates to a method 200 of processing data. The method includes in step 202 of pre-instructing a data processing machine to request print results of a scan of input data to the data processing machine prior to scanning of the input data. Step 204 includes scanning the input data to the data processing machine 110 while step 206 includes completing the data processing to achieve results from the data processing of the input data. Step 208 includes requesting print job output 140 of the results from the data processing of the input data, while step 210 includes printing the results, which is illustrated in FIG. 1 by way of example as being performed by the printer 130. In one embodiment, step 208 of requesting the print job output 140 is performed by the at least one processor 122 of the workstation 120. Alternatively, via path 212, step 208 may be bypassed wherein the at least one processor 112 of the data processing machine 110 communicates with the at least one processor 132 of the printer 130 to request print job output 140 of the results from the data processing of the input data by implementing step 210 of printing the results by printer 130. The method 200 may be implemented wherein print results may be in the form of individual data results 212a, and/or group data results 212b, and/or summary results 212c. Additionally, the method 200 may be implemented wherein the input data are student responses to an examination and the data processing machine 110 is a response scoring and analyzing machine.

Thus, it can be appreciated that embodiments of the present disclosure described above relate to a data processing system that includes a data processing machine configured for receiving pre-instructions via at least one printer actuation key to request print results of a scan of input data to the data processing machine prior to scanning of the input data, and optionally configuring the system for a processor of a workstation, or a processor of the data processing machine to communicate directly with a processor of the printer, to request print job results or for a processor of the data processing machine to request the print job results directly from the processor of the printer.

## Claims

1. A data processing system comprising:
a data processing machine comprising:
at least one processor; and
at least one printer command key,
a printer comprising:
at least one processor; and
a workstation comprising:
at least one processor,
wherein the at least one processor of the data processing machine, the at least one processor of the workstation, and the at least one processor of the printer communicate with one another, and
wherein at least one of the at least one processor of the data processing machine, the at least one processor of the workstation, and the at least one processor of the printer has a set of programmable instructions configured for execution thereof for:
receiving pre-instructions via the at least one printer command key to request print results of a scan of input data to the data processing machine prior to scanning of the input data.

2. The data processing system of claim 1, wherein the at least one processor of the data processing machine communicates with the at least one processor of the workstation, wherein the at least one processor of the workstation has a set of programmable instructions configured for execution by the at least one processor of the workstation for:
requesting print results of the scan of input data to the data processing machine prior to scanning of the input data.

3. The data processing system of claim 1, wherein the at least one processor of the data processing machine communicates with the at least one processor of the printer, wherein the at least one processor of the data processing machine has a set of programmable instructions configured for execution by the at least one processor of the data processing machine for:
requesting print results of the scan of input data to the data processing machine prior to scanning of the input data.

4. The data processing system according to claim 1, wherein the at least one processor of the data processing machine has a set of programmable instructions configured for execution by the at least one processor of the data processing machine for:
scanning the input data to the data processing machine; and
completing the data processing to achieve results from the data processing of the input data.

5. The data processing system according to claim 4, wherein the at least one processor of the workstation communicates with the at least one processor of the data processing machine and with the at least one processor of the printer, wherein the at least one processor of the workstation has a set of programmable instructions configured for execution by the at least one processor of the workstation for:
requesting a print job output by the printer of the results from the data processing of the input data by the data processing machine; and
printing the results by the printer.

6. The data processing system according to claim 4, wherein the at least one processor of the data processing machine communicates with the at least one processor of the printer, wherein the at least one processor of the data processing machine and the at least one processor of the printer have a set of programmable instructions configured for execution by the at least one processor of the at least one data processing machine and the at least one processor of the printer for:
requesting a print job output by the printer of the results from the data processing of the input data by the data processing machine; and
printing the results by the printer.

7. The data processing system of claim 1, wherein the print results are at least one of individual data results, group data results, and summary results.

8. The data processing system of claim 1, wherein the input data are student responses to an examination and wherein the data processing machine is a response scoring and analyzing machine.

9. A data processing machine comprising:
at least one processor; and
at least one printer command key,
wherein the at least one processor is configured for communication with at least one processor of a workstation and with at least one processor of a printer,
wherein the at least one processor of the data processing machine, the at least one processor of the workstation, and the at least one processor of the printer communicate with one another, and
wherein at least one of the at least one processor of the data processing machine, the at least one processor of the workstation, and the at least one processor of the printer has a set of programmable instructions configured for execution thereof for:
receiving pre-instructions via the at least one printer command key to request print results of a scan of input data to the data processing machine prior to scanning of the input data.

10. A method of processing data comprising:
pre-instructing a data processing machine to request print results of a scan of input data to the data processing machine prior to scanning of the input data.
